# EUROPEAN PATENT SPECIFICATION

(11) **EP 2 687 439 B1**
(45) Date of publication and mention of the grant of the patent: **21.12.2016**
(21) Application number: 12177213.1
(22) Date of filing: 20.07.2012
(51) Int. Cl.: B64C 21/06

(54) **Laminar flow panel**
Laminare Strömungsplatte
Panneau à flux laminaire

(43) Date of publication of application: 22.01.2014
(73) Proprietor: Stichting Nationaal Lucht- en Ruimtevaart Laboratorium, 1059 CM Amsterdam (NL)
(72) Inventor: De Bruin, Antonius Cornelis, 8317 AA Kraggenburg (NL); De Vries, Hendrikus Petrus Jacobus, 8347 JL Eesveen (NL)
(74) Representative: De Vries & Metman

(56) References cited:
- DE-A1- 4 414 205
- DE-A1-102010 014 641
- DE-A1-102010 063 769
- US-A- 2 843 341

## Description

The invention firstly relates to a laminar flow panel, comprising a top layer, a bottom layer and intermediate means connecting the top layer with the bottom layer, wherein the top layer is provided with a first number of suction holes with a first cross sectional area fully traversing said top layer and the bottom layer is provided with a second, smaller number of collecting holes with a second, larger cross sectional area fully traversing said bottom layer and adapted to be connected to a suction means, wherein the intermediate means comprises a central layer made of an air permeable material.

Such a laminar flow panel is known from DE-A1-10 2010 014641 and from DE-A1-10 2010 063769.

To date hybrid laminar flow control (HLFC) is a known technique for reducing the drag of an aircraft, according to which part of the boundary layer is sucked into suction holes provided in the skin (top layer) of the aircraft for maintaining a laminar flow. A first type of state of the art HLFC suction panels requires a complex, difficult to manufacture (and thus costly) and heavy structure with multiple suction chambers. Each suction chamber needs to be optimized for the local pressure at the skin of the aircraft and this leads to costly and heavy suction means. A second type of state of the art HLFC suction panels needs only one central suction chamber, but requires that a correct mass flow distribution of the sucked air is obtained by correctly dimensioning the cross sectional area and pitch of the collecting holes in the bottom layer. Furthermore this design requires the use of stringers between the top and bottom layers. This leads to a quite thick and thus relatively stiff panel which is difficult to integrate into the remainder of the aircraft (e.g. wing or tail) structure and will carry a too large part of the bending moments. Further it still requires the use of complex and expensive production techniques. Finally, the obtained stringer separated suction compartments will lead to discontinuities in the boundary layer suction conditions and surface waviness at the stringer positions, which again may lead to increased laminar boundary layer instabilities.

The use of a central layer instead of stringers leads to a number of advantages. The central layer supports the top layer in a continuous manner (whereas the stringers only locally, at distinct positions, support the top layer) enabling the use of a thinner, and thus lighter top layer (skin). Such a thinner top layer facilitates the production of the suction holes and will yield suction holes with improved quality and less prone to clogging. The overall structure of the laminar flow panel is simpler (and thus less costly), lighter and thinner, thus reducing its stiffness and promoting its applicability. A thinner panel results in more available space for other aircraft parts, such as operating cables and/or high lift devices (especially in leading edges of the wing or tail structure). The panel according to the invention can be optimised for pressure distribution conditions during cruise flight, avoiding the need for using suction compartments, and avoiding discontinuities in suction velocity over the panel.

It is an object of the present invention to provide an improved laminar flow panel of the above mentioned type.

In accordance with the present invention a laminar flow panel is provided, in which the central layer is provided with at least one non permeable air flow restricting member extending there through between the top layer and bottom layer for locally restricting an air flow in the central layer in a direction not perpendicularly to and between said top and bottom layers. Such a compartmented structure may be needed in certain high pressure gradient areas to prevent an uncontrolled flow of the air along the permeable central layer.

For example, it is conceivable that said at least one non permeable air flow restricting member comprises resin material injected into the central layer which forms a barrier for the air flow.

In one embodiment of the laminar flow panel according to the present invention, the central layer comprises a permeable open cell foam structure with a pore diameter which preferably is smaller than 0,5 mm. Such a material offers favourable flow conditions for the sucked air in the central layer, while at the same time providing sufficient strength and stability to the panel.

In another embodiment the central layer has a thickness between 2 and 4 mm and preferably of 2 mm.

When, in accordance with another embodiment of the laminar flow panel according to the present invention, the central layer has a thickness larger than 3 to 4 times the diameter or apparent diameter of the collecting holes, the flow towards a collecting hole in the bottom layer will not significantly disturb the pressure distribution below the top layer.

The indication "apparent diameter" is used to also include non-circular collecting holes, and such an apparent diameter yields a cross sectional area equal to the cross sectional area of the non-circular hole.

In one embodiment, the top layer comprises a metal sheet, for example having a thickness between 0,4 and 0,8 mm and preferably of 0,5 mm.

It is conceivable that the suction holes (in the top layer) are provided with a uniform cross sectional area and are positioned at a uniform pitch. Further it may be advantageous that such suction holes are substantially circular with a diameter between 0,05 and 0,1 mm and preferably of 0,09 mm, and that suction holes are positioned at a pitch between 0,6 and 1,5 mm and preferably of 0,7 mm.

For manufacturing the holes there are many options. A preferred one, though, is that the suction holes are laser-drilled holes. This allows to combine high production rates with high precision holes with very reproducible properties.

In one embodiment of the laminar flow panel according to the present invention, the bottom layer comprises a metal sheet or a fibre reinforced composite plate, preferably a carbon fibre reinforced composite plate.

The bottom layer may have a minimum thickness of 0,4 mm and preferably of 2 mm. Whereas, as mentioned before, the suction holes in the top layer preferably are positioned at a uniform pitch, the collecting holes in the bottom layer may be positioned at a variable pitch. This may improve the performance of the laminar flow panel and allows a very effective fine tuning.

In a further embodiment, the collecting holes are substantially circular with a diameter between 0,4 and 1 mm and preferably of 0,5 mm.

In yet another embodiment of the laminar flow panel, the collecting holes are positioned at a pitch between 7 and 40 mm and preferably at an average pitch between 8 and 12 mm, most preferably 10 mm.

When the top layer and bottom layer are attached to the central layer through adhesive layers, a very effective connection between the parts of the panel is obtained in which the connecting force not just acts locally, but substantially continuously over the entire extent of the panel. It will be clear that the suction holes and collecting holes also will traverse the adhesive layers (or, in other words, that the adhesive layers are interrupted at the very location of said holes).

The invention secondly relates to an assembly of a laminar flow panel according to the present invention and suction means connected to the collecting holes. According to an embodiment of such an assembly, the suction means are devised to cause a maximum air velocity through the suction holes of 30 m/s and preferably an average air velocity of substantially 0,2 m/s, and are devised to cause an air velocity through the collecting holes between 60 and 250 m/s.

Such a maximum air velocity through the suction holes allows to limit the discrete suction velocity in the suction holes of the top layer, such that a too large distortion of the laminar boundary layer may be prevented, which otherwise could cause a premature transition to a turbulent flow. Theoretically a given required average suction velocity and a given maximum discrete suction velocity then may be used to calculate a minimum required ratio between the suction hole pitch and the suction hole diameter.

Because in the bottom layer there is no risk of flow distortion, higher discrete air velocities are allowable.

The invention further relates to an aircraft part, such as a wing, tail structure, engine cowl or fuselage part, comprising a laminar flow panel according to the present invention.

Finally the invention relates to an aircraft comprising an aircraft part according to the present invention.

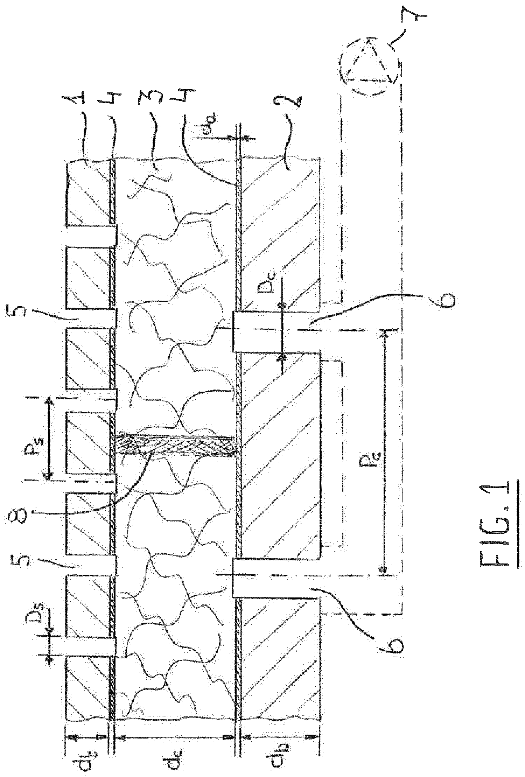

Hereinafter the invention will be elucidated while referring to the only figure which shows, schematically and not to scale, a cross sectional view of an embodiment of a laminar flow panel according to the present invention.

The figure shows a laminar flow panel, comprising a top layer 1, a bottom layer 2 and a central layer 3 connecting the top layer with the bottom layer. In the illustrated embodiment the top layer 1 and bottom layer 3 are attached to the central layer 3 through adhesive layers 4 (which may have a thickness dₐ of 0,2 mm.

The top layer 1 is provided with a first number of suction holes 5 fully traversing said top layer 1 and the adjacent adhesive layer 4. Likewise, the bottom layer 2 is provided with a second, smaller number of collecting holes 6 fully traversing said bottom layer 3 and adjacent adhesive layer 4. The collecting holes 6 are adapted to be connected to suction means 7 illustrated schematically in broken lines (for example an air pump). Such suction means 7 may be devised to cause a maximum air velocity through the suction holes 5 of 30 m/s and preferably an average air velocity of substantially 0,2 m/s, and to cause an air velocity through the collecting holes 6 between 60 and 250 m/s.

The central layer 3 is made of an air permeable material, for example a permeable open cell foam structure with a pore diameter which preferably is smaller than 0,5 mm.

It is possible that the central layer 3 is provided with at least one non permeable air flow restricting member 8 extending there through between the top layer 1 and bottom layer 2 (or, if provided, between the respective adhesive layers 4 attached to the top layer and bottom layer) for locally restricting an air flow in the central layer 3 in a direction not perpendicularly to and between said top and bottom layers. The number and position of such members 8 may vary (and the pattern thereof may be regular or irregular).

Such a non permeable air flow restricting member 8 for example may comprise resin material injected into the central layer 3.

The central layer 3 has a thickness d_{c} between 2 and 4 mm and preferably of 2 mm. Preferably, the central layer 3 has a thickness d_{c} larger than 3 to 4 times the diameter D_{c} (or apparent diameter) of the collecting holes 6.

The top layer 1 may comprise a metal sheet (for example of aluminium) which also may define the outer skin. Said top layer may have a thickness dₜ between 0,4 and 0,8 mm and preferably of 0,5 mm.

The suction holes 5 in the top layer 1 may be provided with a uniform cross sectional area and may be positioned at a uniform pitch pₛ which may vary between 0,6 and 1,5 mm and preferably is 0,7 mm. Preferably the suction holes 5 are substantially circular with a diameter Dₛ between 0,05 and 0,1 mm and preferably of 0,09 mm.

For ease of manufacture, the suction holes 5 may be laser-drilled holes.

The bottom layer 2 may comprises a metal sheet or a fibre reinforced composite plate, preferably a carbon fibre reinforced composite plate and may have a minimum thickness d_{b} of 0,4 mm and preferably of 2 mm. In the bottom layer 2 the collecting holes 6 may be positioned at a variable pitch p_{c} for obtaining the required flow pattern in the panel. Further, or in addition, it is preferred that the collecting holes 6 are positioned at a pitch p_{c} between 7 and 40 mm and preferably at an average pitch between 8 and 12 mm, most preferably 10 mm.

The collecting holes 6 too may be substantially circular with a diameter between 0,4 and 1 mm and preferably of 0,5 mm.

The laminar flow panel as illustrated may be part of (or be integrated into) an aircraft part, such as for example a wing, tail structure, engine cowl or fuselage part.

The invention, among others, allows to achieve the following advantages over the state of the art: low complexity of the structure; low constructional weight; no discontinuous changes in the suction velocity; a less stiffer panel and a very compact design which offers maximum internal free space in the respective aircraft part (such as wing or tail nose) for accommodating other members.

The invention is not limited to the embodiment described before which may be varied within the scope of the invention as defined by the appending claims.

## Claims

1. Laminar flow panel, comprising a top layer (1), a bottom layer (2) and intermediate means (3,4) connecting the top layer with the bottom layer, wherein the top layer is provided with a first number of suction holes (5) with a first cross sectional area fully traversing said top layer (1) and the bottom layer is provided with a second, smaller number of collecting holes (6) with a second, larger cross sectional area fully traversing said bottom layer (5) and adapted to be connected to a suction means (7), wherein the intermediate means comprises a central layer (3) made of an air permeable material, **characterized in that** the central layer (3) is provided with at least one non permeable air flow restricting member (8) extending there through between the top layer (1) and bottom layer (2) for locally restricting an air flow in the central layer in a direction not perpendicularly to and between said top and bottom layers.

2. Laminar flow panel according to claim 3, wherein said at least one non permeable air flow restricting member (8) comprises resin material injected into the central layer (3).

3. Laminar flow panel according to claim 1, wherein the central layer (3) comprises a permeable open cell foam structure with a pore diameter which preferably is smaller than 0,5 mm.

4. Laminar flow panel according to any of the previous claims, wherein the central layer (3) has a thickness (d_{c}) between 2 and 4 mm and preferably of 2 mm.

5. Laminar flow panel according to any of the previous claims, wherein the central layer (3) has a thickness (d_{c}) larger than 3 to 4 times the diameter or apparent diameter (D_{c}) of the collecting holes (6).

6. Laminar flow panel according to any of the previous claims, wherein the top layer (1) comprises a metal sheet.

7. Laminar flow panel according to any of the previous claims, wherein the top layer (1) has a thickness (dt) between 0,4 and 0,8 mm and preferably of 0,5 mm.

8. Laminar flow panel according to any of the previous claims, wherein the suction holes (5) are provided with a uniform cross sectional area and are positioned at a uniform pitch (pₛ).

9. Laminar flow panel according to any of the previous claims, wherein the suction holes (5) are substantially circular with a diameter (Dₛ) between 0,05 and 0,1 mm and preferably of 0,09 mm.

10. Laminar flow panel according to any of the previous claims, wherein the suction holes (5) are positioned at a pitch (pₛ) between 0,6 and 1,5 mm and preferably of 0,7 mm.

11. Laminar flow panel according to any of the previous claims, wherein the suction holes (5) are laser-drilled holes.

12. Laminar flow panel according to any of the previous claims, wherein the bottom layer (2) comprises a metal sheet or a fibre reinforced composite plate, preferably a carbon fibre reinforced composite plate.

13. Laminar flow panel according to any of the previous claims, wherein the bottom layer (2) has a minimum thickness (d_{b}) of 0,4 mm and preferably of 2 mm.

14. Laminar flow panel according to any of the previous claims, wherein the collecting holes (6) are positioned at a variable pitch (p_{c}).

15. Laminar flow panel according to any of the previous claims, wherein the collecting holes (6) are substantially circular with a diameter (D_{c}) between 0,4 and 1 mm and preferably of 0,5 mm.

16. Laminar flow panel according to any of the previous claims, wherein the collecting holes (6) are positioned at a pitch (p_{c}) between 7 and 40 mm and preferably at an average pitch between 8 and 12 mm, most preferably 10 mm.

17. Laminar flow panel according to any of the previous claims, wherein the top layer (1) and bottom layer (2) are attached to the central layer through adhesive layers (4).

18. Assembly of a laminar flow panel according to any of the previous claims and suction means (7) connected to the collecting holes (6).

19. Assembly according to claim 18, wherein the suction means (7) are devised to cause a maximum air velocity through the suction holes (5) of 30 m/s and preferably an average air velocity of substantially 0,2 m/s, and are devised to cause an air velocity through the collecting holes (6) between 60 and 250 m/s.

20. Aircraft part, such as a wing, tail structure, engine cowl or fuselage part, comprising a laminar flow panel according to any of the claims 1-17.

21. Aircraft comprising an aircraft part according to claim 20.

## Patentansprüche

1. Laminarströmungspaneel, welches aufweist eine obere Schicht (1), eine untere Schicht (2) und ein Zwischenmittel (3, 4) aufweist, welches die obere Schicht mit der unteren Schicht verbindet, wobei die obere Lage mit einer ersten Zahl von Sauglöchern (5) mit einer ersten Querschnittsfläche, die die obere Schicht (1) vollständig durchqueren, bereitgestellt ist und die untere Schicht mit einer zweiten, kleineren Zahl von Sammellöchern (6) mit einer zweiten, größeren Querschnittsfläche, die die untere Schicht (5) vollständig durchqueren und dazu eingerichtet sind, an ein Saugmittel (7) angeschlossen zu werden, bereitgestellt ist, wobei das Zwischenmittel eine zentrale Schicht (3),welche aus einem luftdurchlässigen Material gefertigt ist, aufweist, **gekennzeichnet dadurch, dass** die zentrale Schicht (3) mit wenigstens einem nicht durchlässigen Luftstrombegrenzungselement (8) bereitgestellt ist, welches sich dahindurch zwischen der oberen Schicht (1) und der unteren Schicht (2) erstreckt zum lokalen Begrenzen eines Luftstroms in der zentralen Schicht in eine Richtung, welche nicht senkrecht zu und zwischen der oberen und der unteren Schicht liegt.

2. Laminarströmungspaneel gemäß Anspruch 3, wobei das wenigstens eine nicht durchlässige Luftstrombegrenzungselement (8) Harzmaterial aufweist, welches in die zentrale Schicht (3) injiziert ist.

3. Laminarströmungspaneel gemäß Anspruch 1, wobei die zentrale Schicht (3) eine durchlässige offenzellige Schaumstruktur mit einem Porendurchmesser, welcher bevorzugt kleiner als 0,5 mm ist, aufweist.

4. Laminarströmungspaneel gemäß irgendeinem der vorhergehenden Ansprüche, wobei die zentrale Schicht (3) eine Dicke (d_{c}) zwischen 2 und 4 mm und bevorzugt von 2 mm hat.

5. Laminarströmungspaneel gemäß irgendeinem der vorhergehenden Ansprüche, wobei die zentrale Schicht (3) eine Dicke (d_{c}) hat, die größer als 3 bis 4 Mal der Durchmesser oder der ersichtliche Durchmesser (D_{c}) der Sammellöcher (6) ist.

6. Laminarströmungspaneel gemäß irgendeinem der vorhergehenden Ansprüche, wobei die obere Schicht (1) ein Metallblech aufweist.

7. Laminarströmungspaneel gemäß irgendeinem der vorhergehenden Ansprüche, wobei die obere Schicht (1) eine Dicke (dₜ) zwischen 0,4 und 0,8 mm und bevorzugt von 0,5 mm hat.

8. Laminarströmungspaneel gemäß irgendeinem der vorhergehenden Ansprüche, wobei die Sauglöcher (5) mit einer gleichmäßigen Querschnittsfläche bereitgestellt sind und in einem gleichmäßigen Abstand(pₛ) angeordnet sind.

9. Laminarströmungspaneel gemäß irgendeinem der vorhergehenden Ansprüche, wobei die Sauglöcher (5) im Wesentlichen kreisförmig mit einem Durchmesser (Dₛ) zwischen 0,05 und 0,1 mm und bevorzugt von 0,09 mm sind.

10. Laminarströmungspaneel gemäß irgendeinem der vorhergehenden Ansprüche, wobei die Sauglöcher (5) in einem Abstand (pₛ) zwischen 0,6 und 1,5mm und bevorzugt von 0,7mm angeordnet sind.

11. Laminarströmungspaneel gemäß irgendeinem der vorhergehenden Ansprüche, wobei die Sauglöcher (5) lasergebohrte Löcher sind.

12. Laminarströmungspaneel gemäß irgendeinem der vorhergehenden Ansprüche, wobei die untere Schicht (2) ein Metallblech oder eine Faserverstärktes-Verbundmaterial-Platte, bevorzugt eine Kohlenstofffaserverstärktes-Verbundmaterial-Platte, aufweist.

13. Laminarströmungspaneel gemäß irgendeinem der vorhergehenden Ansprüche, wobei die untere Schicht (2) eine Mindestdicke (d_{b}) von 0,4 mm und bevorzugt von 2 mm hat.

14. Laminarströmungspaneel gemäß irgendeinem der vorhergehenden Ansprüche, wobei die Sammellöcher (6) in einem variablen Abstand (p_{c}) angeordnet sind.

15. Laminarströmungspaneel gemäß irgendeinem der vorhergehenden Ansprüche, wobei die Sammellöcher (6) im Wesentlichen kreisförmig mit einem Durchmesser (D_{c}) zwischen 0,4 und 1 mm und bevorzugt von 0,5 mm sind.

16. Laminarströmungspaneel gemäß irgendeinem der vorhergehenden Ansprüche, wobei die Sammellöcher (6) in einem Abstand (p_{c}) zwischen 7 und 40 mm und bevorzugt in einem mittleren Abstand zwischen 8 und 12 mm, am bevorzugtesten 10 mm, angeordnet sind.

17. Laminarströmungspaneel gemäß irgendeinem der vorhergehenden Ansprüche, wobei die obere Schicht (1) und die untere Schicht (2) an der zentralen Schicht mittels einer Klebeschicht (4) angebracht sind.

18. Einrichtung aus einem Laminarströmungspaneel gemäß irgendeinem der vorhergehenden Ansprüche und Saugmittel (7), welche mit den Sammellöchern (6) verbunden sind.

19. Einrichtung gemäß Anspruch 18, wobei die Saugmittel dazu ausgestaltet sind, eine maximale Luftgeschwindigkeit durch die Sauglöcher (5) hindurch von 30 m/s und bevorzugt eine mittlere Luftgeschwindigkeit von im Wesentlichen 0,2 m/s zu verursachen, und dazu ausgestaltet sind, eine Luftgeschwindigkeit durch die Sammellöcher (6) zwischen 60 und 250 m/s zu verursachen.

20. Luftfahrzeugteil, wie zum Beispiel ein Flügel, eine Heckstruktur, eine Triebwerkverkleidung oder ein Rumpfteil, aufweisend ein Laminarströmungspaneel gemäß irgendeinem der vorhergehenden Ansprüche.

21. Luftfahrzeug, aufweisend ein Luftfahrzeugteil gemäß Anspruch 20.

## Revendications

1. Panneau à écoulement laminaire comprenant une couche supérieure (1), une couche inférieure (2) et un moyen intermédiaire (3, 4) raccordant la couche supérieure à la couche inférieure, dans lequel la couche supérieure est prévue avec un premier nombre de trous d'aspiration (5) avec une première section transversale qui traverse complètement ladite couche supérieure (1) et la couche inférieure est prévue avec un second nombre inférieur de trous de collecte (6) avec une seconde section transversale plus grande qui traverse complètement ladite couche inférieure (5) et adaptée pour être raccordée à un moyen d'aspiration (7), dans lequel le moyen intermédiaire comprend une couche centrale (3) réalisée avec un matériau perméable à l'air, **caractérisé en ce que** la couche centrale (3) est prévue avec au moins un élément de limitation d'écoulement d'air non perméable (8) s'étendant à travers cette dernière entre la couche supérieure (1) et la couche inférieure (2) pour limiter localement un écoulement d'air dans la couche centrale dans une direction non perpendiculaire à et entre lesdites couches supérieure et inférieure.

2. Panneau à écoulement laminaire selon la revendication 3, dans lequel ledit au moins un élément de limitation d'écoulement d'air non perméable (8) comprend un matériau en résine injecté dans la couche centrale (3).

3. Panneau à écoulement laminaire selon la revendication 1, dans lequel la couche centrale (3) comprend une structure en mousse à alvéoles ouverts perméable avec un diamètre de pore qui est de préférence inférieur à 0,5 mm.

4. Panneau à écoulement laminaire selon l'une quelconque des revendications précédentes, dans lequel la couche centrale (3) a une épaisseur (d_{c}) comprise entre 2 et 4 mm et de préférence de 2 mm.

5. Panneau à écoulement laminaire selon l'une quelconque des revendications précédentes, dans lequel la couche centrale (3) a une épaisseur (d_{c}) supérieure à 3 à 4 fois le diamètre ou le diamètre apparent (D_{c}) des trous de collecte (6).

6. Panneau à écoulement laminaire selon l'une quelconque des revendications précédentes, dans lequel la couche supérieure (1) comprend une tôle métallique.

7. Panneau à écoulement laminaire selon l'une quelconque des revendications précédentes, dans lequel la couche supérieure (1) a une épaisseur (dt) comprise entre 0,4 et 0,8 mm et de préférence de 0,5 mm.

8. Panneau à écoulement laminaire selon l'une quelconque des revendications précédentes, dans lequel les trous d'aspiration (5) sont prévus avec une surface transversale uniforme et sont positionnés à un pas uniforme (pₛ).

9. Panneau à écoulement laminaire selon l'une quelconque des revendications précédentes, dans lequel les trous d'aspiration (5) sont sensiblement circulaires avec un diamètre (Dₛ) compris entre 0,05 et 0,1 mm et de préférence de 0,09 mm.

10. Panneau à écoulement laminaire selon l'une quelconque des revendications précédentes, dans lequel les trous d'aspiration (5) sont positionnés à un pas (pₛ) compris entre 0,6 et 1,5 mm et de préférence de 0,7 mm.

11. Panneau à écoulement laminaire selon l'une quelconque des revendications précédentes, dans lequel les trous d'aspiration (5) sont des trous percés au laser.

12. Panneau à écoulement laminaire selon l'une quelconque des revendications précédentes, dans lequel la couche inférieure (2) comprend une tôle métallique ou une plaque composite renforcée en fibres, de préférence une plaque composite renforcée en fibres de carbone.

13. Panneau à écoulement laminaire selon l'une quelconque des revendications précédentes, dans lequel la couche inférieure (2) a une épaisseur minimum (d_{b}) de 0,4 mm et de préférence de 2 mm.

14. Panneau à écoulement laminaire selon l'une quelconque des revendications précédentes, dans lequel les trous de collecte (6) sont positionnés à un pas variable (p_{c}).

15. Panneau à écoulement laminaire selon l'une quelconque des revendications précédentes, dans lequel les trous de collecte (6) sont sensiblement circulaires avec un diamètre (D_{c}) compris entre 0,4 et 1 mm et de préférence de 0,5 mm.

16. Panneau à écoulement laminaire selon l'une quelconque des revendications précédentes, dans lequel les trous de collecte (6) sont positionnés à un pas (p_{c}) compris entre 7 et 40 mm et de préférence à un pas moyen compris entre 8 et 12 mm, de manière préférée entre toutes de 10 mm.

17. Panneau à écoulement laminaire selon l'une quelconque des revendications précédentes, dans lequel la couche supérieure (1) et la couche inférieure (2) sont fixées à la couche centrale par le biais de couches adhésives (4).

18. Ensemble d'un panneau à écoulement laminaire selon l'une quelconque des revendications précédentes et de moyens d'aspiration (7) raccordés aux trous de collecte (6).

19. Ensemble selon la revendication 18, dans lequel les moyens d'aspiration (7) sont conçus pour provoquer une vitesse d'air maximum à travers les trous d'aspiration (5) de 30 m/s et de préférence une vitesse d'air moyenne sensiblement de 0,2 m/s, et sont conçus pour provoquer une vitesse d'air à travers les trous de collecte (6) comprise entre 60 et 250 m/s.

20. Partie d'avion, telle qu'une aile, une structure de queue, un capot de moteur ou une partie de fuselage, comprenant un panneau à écoulement laminaire selon l'une quelconque des revendications 1 à 17.

21. Avion comprenant une partie d'avion selon la revendication 20.
